(19) Europäisches Patentamt
European Patent Office
Office européen des brevets

(11) **EP 3 378 207 B1**

(12) **EUROPEAN PATENT SPECIFICATION**

(45) Date of publication and mention of the grant of the patent:
**24.04.2019 Bulletin 2019/17**

(51) Int Cl.:
*H04L 12/801* (2013.01)    *H04L 29/06* (2006.01)

(21) Application number: **15797952.7**

(86) International application number:
**PCT/EP2015/076675**

(22) Date of filing: **16.11.2015**

(87) International publication number:
**WO 2017/084691 (26.05.2017 Gazette 2017/21)**

(54) **METHOD FOR CONGESTION CONTROL IN MULTIPARTY CONFERENCING, MULTIPOINT CONTROL UNIT, COMPUTER PROGRAM AND COMPUTER PROGRAM PRODUCT**

VERFAHREN ZUR ÜBERLASTUNGSSTEUERUNG IN MEHRPARTEIENKONFERENZEN, MEHRPUNKTSTEUEREINHEIT, COMPUTERPROGRAMM UND COMPUTERPROGRAMMPRODUKT

PROCÉDÉ POUR UNE COMMANDE DE CONGESTION DANS UNE CONFÉRENCE MULTIPARTITE, UNITÉ DE COMMANDE MULTIPOINT, PROGRAMME D'ORDINATEUR ET PRODUIT PROGRAMME D'ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.09.2018 Bulletin 2018/39**

(73) Proprietor: **Telefonaktiebolaget LM Ericsson (publ)**
**164 83 Stockholm (SE)**

(72) Inventors:
• **JOHANSSON, Ingemar**
**S-976 32 Luleå (SE)**
• **BURMAN, Bo**
**S-194 47 Upplands Väsby (SE)**
• **GABIN, Frederic**
**F-93170 Bagnolet (FR)**

• **WESTERLUND, Magnus**
**S-194 55 Upplands Väsby (SE)**

(74) Representative: **Ericsson**
**Patent Development**
**Torshamnsgatan 21-23**
**164 80 Stockholm (SE)**

(56) References cited:
**US-A1- 2015 244 760**

• **INGEMAR JOHANSSON: "Self-clocked rate adaptation for conversational video in LTE", CAPACITY SHARING WORKSHOP, ACM, 2 PENN PLAZA, SUITE 701 NEW YORK NY 10121-0701 USA, 18 August 2014 (2014-08-18), pages 51-56, XP058054580, DOI: 10.1145/2630088.2631976 ISBN: 978-1-4503-2991-0**

## Description

### Technical field

The technology disclosed herein relates generally to the field of multiparty conferencing, and in particular to method in a multipoint control unit for congestion control in multiparty conferencing, a multipoint control unit, computer program and computer program product.

### Background

Multiparty conferencing is a service that may be provided by a centralized server, wherein participants may join a conference e.g. by dialing a telephone number or, for Internet-based conferences, a destination address. A Multi-Conferencing Unit (MCU), also denoted multipoint control unit, handles signaling, switching, mixing, filtering and forwarding of different media streams, and control exchanges for all participants of the conference.

Congestion control in such centralized multiparty conferences is far from trivial. Several general strategies exist. One strategy is to have a sending participant (sender) deliver the best possible quality supported by it to the MCU. Then for each leg from the MCU to a respective receiving participant (receiver) the MCU performs transcoding if the supported rate between the MCU and the particular receiver is insufficient for the stream that the MCU receives. Transcoding, i.e. decoding the stream and then encoding it in another format, has the drawbacks that it degrades quality, increases end-to-end latency, and is also typically computationally expensive.

Another strategy is to group receivers according to the supported bit-rate between the MCU and the particular receivers. In this way the number of different bit-rates that the MCU needs to produce can be reduced. The bit-rates available for transmission can, for instance, be obtained through transcoding from the sender. This strategy reduces the number of different transcodings needed in the MCU, and hence number of performed transcodings. However, just as for the above described strategy, transcoding is still needed, which as mentioned e.g. degrades the quality.

Self-clocking Rate Adaptation for Multimedia (SCReAM) is a candidate congestion control scheme for Real-time Transport Protocol/ Real-time Transport Control Protocol (RTP/RTCP). The scheme is self-clocking which means that the amount of RTP packets that are transmitted is in direct proportion to the amount of RTP packets that are being acknowledged. This makes SCReAM inherently stable in congested situations. Unlike many other multimedia congestion control schemes, the receiver in SCReAM does not communicate a bitrate to the sender (rate based schemes). Instead the sustainable bitrate is inferred by the SCReAM sender, from the acknowledgements sent by the SCReAM receiver. This makes the design of an MCU that supports SCReAM different from an MCU that supports other rate based schemes.

Temporary Maximum media stream Bit Rate Request (TMMBR) is a conceivable solution for a MCU to indicate to the media sender the currently highest bit-rate supported for this stream. However, this solution is sub-optimal for a congestion mechanism such as SCReAM that doesn't regularly arrive at a supported bit-rate decision and instead uses a congestion window and is driven by acknowledgements.

The publications INGEMAR JOHANSSON: "Self-clocked rate adaptation for conversational video in LTE", CAPACITY SHARING WORKSHOP, ACM, 2 PENN PLAZA, SUITE 701 NEW YORK NY 10121-0701 USA, 18 August 2014 (2014-08-18), pages 51-56, XP058054580, DOI: 10.1145/2630088.2631976 ISBN: 978-1-4503-2991-0 and US 2015/244760 A1 (TUN MYO [US] ET AL) 27 August 2015 describe systems of the prior art.

### Summary

An objective of the present teachings is to improve on multi-party conferencing by increasing quality of received media streams and reducing end-to-end latency, caused to a large extent by the required transcoding. This objective is met, in various embodiments, as defined by the appended claims, by providing methods and devices by means of which transcoding can be avoided.

The objective is according to an aspect achieved by a method performed in a multipoint control unit for congestion control in multiparty conferencing. The method comprises forwarding packets of a media stream from the sending part to receiving parts of the multiparty conference, the receiving parts being two or more; receiving, from each receiving part, a respective receiver feedback report on the reception of the packets; establishing a sender feedback report comprising a timestamp for a given packet sequence number, wherein the timestamp reflects a wall-clock time when the packet with the given packet sequence number have been acknowledged by a threshold number of the receiving parts; and providing the established sender feedback report to the sending part.

The method enables a multipoint control unit operation without the need to transcode video streams. This is enabled by providing the sending part with a combined feedback report of the currently supported bit-rates at the receiving parts.

The objective is according to an aspect achieved by a computer program for a multipoint control unit for congestion control in multiparty conferencing. The computer program comprises computer program code, which, when executed on at least one processor on the multipoint control unit entity causes the multipoint control unit to perform the method as above.

The objective is according to an aspect achieved by a computer program product comprising a computer program as above and a computer readable means on which the computer program is stored.

The objective is according to an aspect achieved by a multipoint control unit for congestion control in multiparty conferencing. The multipoint control unit is configured to: forward packets of a media stream from the sending part to receiving parts (4a, 4b, 4c) of the multiparty conference, the receiving parts being two or more; receive, from each receiving part, a respective receiver feedback report on the reception of the packets; establish a sender feedback report comprising a timestamp for a given packet sequence number, wherein the timestamp reflects a wall-clock time when the packet with the given packet sequence number have been acknowledged by a threshold number of the receiving parts; and provide the established sender feedback report to the sending part.

Further features and advantages of the embodiments of the present teachings will become clear upon reading the following description and the accompanying drawings.

## Brief description of the drawings

Figure 1 illustrates computation of number of bytes in flight.

Figure 2 illustrates an embodiment according to the present invention.

Figure 3 illustrates an embodiment according to the present invention.

Figure 4 illustrates an MCU for switching between streams.

Figure 5 illustrates a flow chart over steps of an embodiment of a method in a multi-point unit in accordance with the present invention.

Figure 6 illustrates schematically a multi-point unit and means for implementing embodiments of the present invention.

Figure 7 illustrates a multi-point unit comprising function modules/software modules for implementing embodiments of the present invention.

## Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

For sake of completeness and in order to provide a thorough understanding of the present invention, the SCReAM congestion control is initially described. The SCReAM congestion control is designed mainly for video, and is similar to Transmission Control Protocol (TCP) with the exception that SCReAM does not ensure any in order delivery up to higher layer. In the following thus, some basics of SCReAM are explained.

First, the scheme, e.g. a sequence of instructions, performed at a sending side is described. The network congestion control performs two main functions: computation of congestion window and transmission scheduling. The computing of congestion window gives an upper limit on the number of bytes in flight i.e. how many bytes that have been transmitted but not yet acknowledged. The transmission scheduling ensures that RTP packets are transmitted only if allowed by a relation between the number of bytes in flight and the congestion window.

Unlike TCP, SCReAM is not a byte oriented protocol; SCReAM is rather an RTP packet oriented protocol. SCReAM keeps a list of transmitted RTP packets and their respective sending times (wall-clock time). The list also comprises a synchronization source identifier used in RTP, denoted SSRC, which uniquely identifies the source of a stream. Still further, the list also comprises payload type (PT) enabling the congestion control to distinguish between streams in cases where the network congestion control schedules many streams. A feedback indicates the highest received RTP sequence number and a timestamp (wall-clock time) when it was received. In addition, an acknowledgement (ACK) list is included in order to enable determination of lost packets.

The feedback format for the SCReAM protocol is under development and a final standardized congestion control using the SCReAM protocol or some derivative thereof that is based on similar ACK clocking principles may use a different feedback format. The SCReAM protocol for real time conversational media might be implemented with Real-time Transport Control Protocol (RTCP) as carrier of the feedback, but other protocols for use as carrier of feedback is also conceivable. Feedback header fields may differ depending on the choice. However, elements in the SCReAM feedback to the sending side (also denoted sender in the following) that are relevant for embodiments according to the present teachings comprise:

- Timestamp (TS): A timestamp value indicating when the last RTP packet was received which makes it possible to compute the one way (extra) delay (OWD).

- $SN_{highest}$: the highest received sequence number (SN) of an RTP packet.

- ACK vector: Indicates reception status of RTP packets with sequence number lower than $SN_{highest}$.

- $N_{lost}$: Accumulated number of lost RTP packets.

- $N_{ECN}$: Accumulated number of packets marked with Explicit Congestion Notification (ECN) Congestion Encountered (CE); i.e. an ECN field within an Internet Protocol (IP) packet is set to CE.

- Source quench bit (Q): Makes it possible to request the sender to reduce its congestion window. This is useful if RTP packets are received from many hosts and it becomes necessary to balance the bitrates between the streams that are sharing the same (congested) transport resource.

In the following, the SCReAM feedback is denoted SCFB.

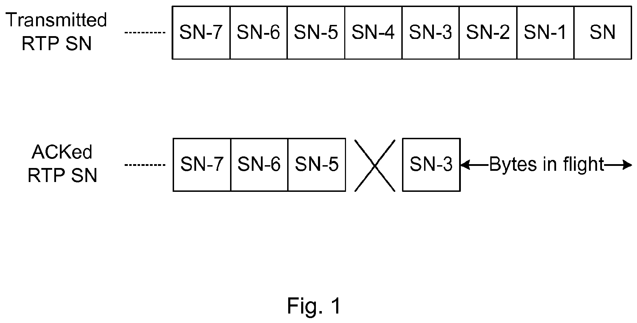

Figure 1 illustrates computation of number of bytes in flight. The number of bytes in flight is computed as the sum of the sizes of the RTP packets ranging from the RTP packet most recently transmitted up to but not including the acknowledged packet with the highest sequence number. The RTP packets and the sequence numbers (SNs), SN-7, SN-6,..., SN -1, SN thereof are illustrated topmost in the figure 1. The acknowledged RTP packets are illustrated bottommost, wherein the RTP packet with sequence number SN-4 was lost, as indicated by the cross. Hence, for the case illustrated in figure 1, the bytes in flight is computed as the sum of sizes (in bytes) of the RTP packets with sequence number SN-2, SN-1 and SN:

$$\text{bytes in flight} = \text{bytes(packet SN-2)} + \text{bytes(packet SN-1)} + \text{bytes(packet SN)}$$

Video rate control in SCReAM is based on measurements of the RTP packet queuing delay in the sender.
Next, the scheme, e.g. a sequence of instructions, performed at the receiving side is described. The receiving side (also denoted receiver in the following) timestamps each received RTP packet and prepares an SCFB packet with feedback elements. Below, only SCReAM feedback elements from the receiver that are relevant for the present teachings are listed.

- $TS_{RX}$: The timestamp of the received RTP packet with the highest sequence number.

- $SN_{highest}$: The highest received RTP sequence number.

- ACK list: A 32 bit vector that indicates received RTP packets. The combination with the RTP sequence number makes it possible to acknowledge the last received 33 RTP packets. It is noted that all packets up to and including a certain RTP sequence number may be acknowledged by the use of the feedback element $SN_{highest}$, i.e. without the ACK list. However, since the ACK list provides acknowledgments for the last received 33 RTP packets, acknowledgments can be obtained selectively for these 33 last received RTP packets.

- $N_{loss}$: Accumulated number of lost RTP packets

- $N_{ECN}$: Accumulated number of ECN CE marked packets

- SSRC: Used for distinction between streams to enable correct calculation of bytes in flight.

- Q bit: Set if sender is required to reduce the bitrate for the given stream. The Q bit in the SCFB is set by the receiver in order to signal that the sender should reduce the bitrate. In response to this the sender will reduce the congestion window with the consequence that the media bitrate decreases. A typical use case for source quench is when the receiver receives streams from sources located at different hosts, where it is typically difficult to apply any rate distribution signaling between the sending hosts. A solution is then that the receiver sets the Q bit in the feedback to the sender, thereby indicating to the sender that it should reduce its rate. If the streams share a common bottleneck, the bandwidth released by the reduction of the congestion window for the flow that had the Q bit set in the feedback will be grabbed by the other flows that did not have the Q bit set. This is ensured by the opportunistic behavior of SCReAM's congestion control.

The reduction in congestion window is proportional to the amount of SCFB feedback with the Q bit set. The reduction is done once per Round-Trip-Time (RTT), i.e. time from transmission of a packet to reception of acknowledgement thereof.

Letting:

N = Number of received SCFB messages in one RTT
NQ = Number of received SCFB messages in one RTT, with Q bit set.
The new congestion window (CWND) is then expressed as:

$$cwnd = max(min\_cwnd, cwnd*(1.0-0.5* NQ /N))$$

A CWND increase should be inhibited for one RTT if the CWND has been decreased as a result of Q bits set in the SCFB. It is noted that CWND is adjusted at most once per RTT. The extreme case is if all SCFB feedback has the Q bit set, in which case CWND is halved every RTT.

Briefly, according to the present teachings SCReAM feedback packets from multiple different endpoints are combined in such a way that a sender sees a current reference path from the sender to any of the endpoints via the MCU. Stated differently, the reference path is selected to represent the paths between the sender and the different endpoints. The reference path may, for instance, be the path having the worst quality. In other embodiments, the reference path may be configured to be the N'th worst path to reduce the impairment for the receivers with better paths at the expense of the N-i that has an even worse path and would thus experience additional impairments. This solution ensures that the sender is enabled to continuously adapt its bit-rate to the actual available path bitrates in the group of receivers.

In the following RTP is used for exemplifying the present teachings. It is however noted that other protocols may be used, for instance Quick UDP Internet Connection (Quic) protocol. It is thus noted that RTP and RTP packets are used purely as an example for illustrative purposes in the description as well as in the figures.

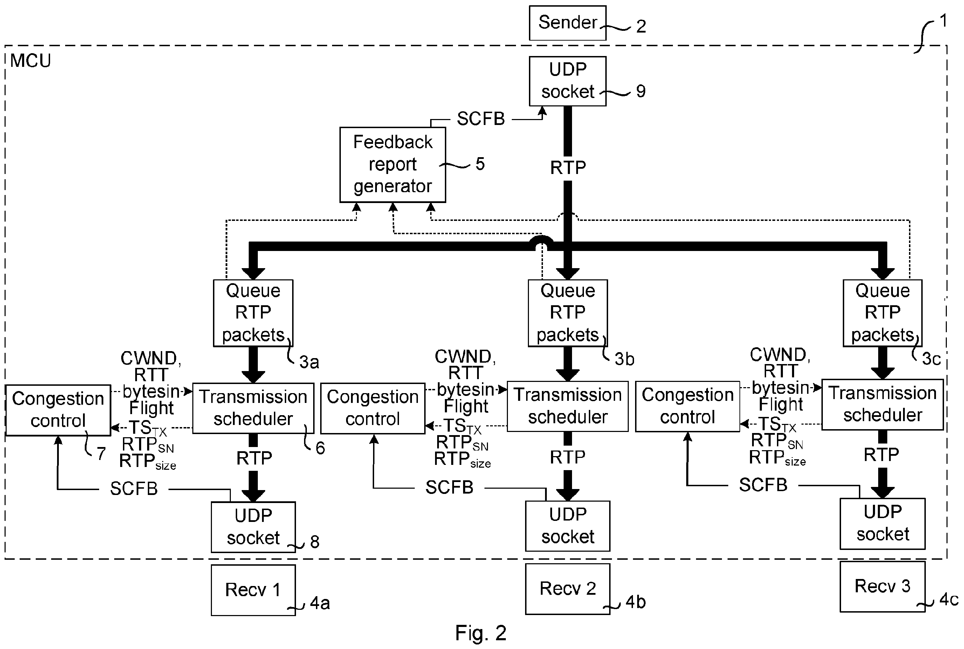

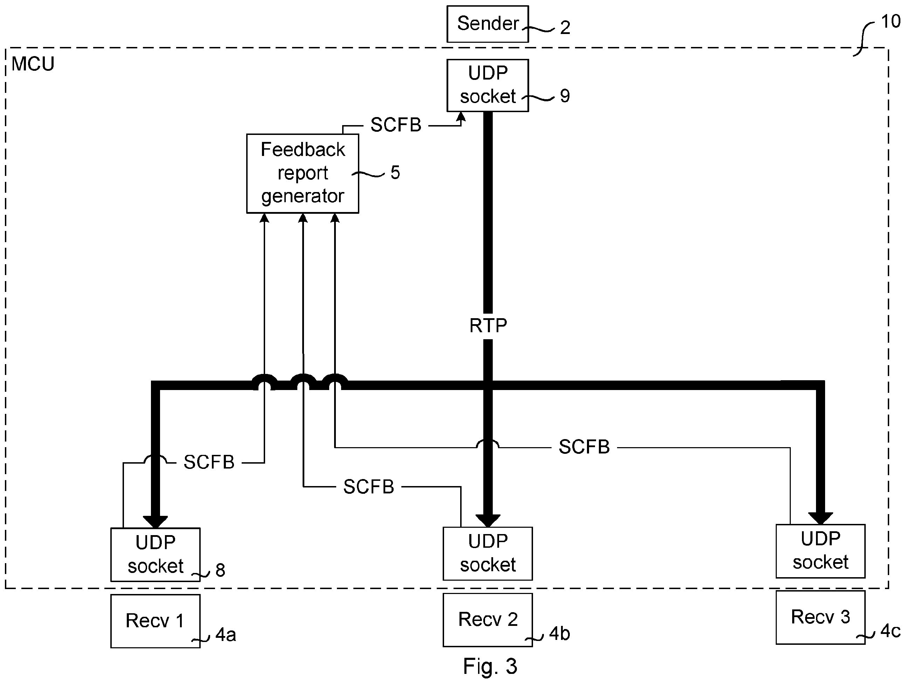

An MCU may forward a media stream, e.g. a video stream, to many receivers in different ways. In figure 2, network congestion control is implemented in the MCU 1 per each receiving endpoint (also denoted receiver). In figure 3, the MCU 10 does not have congestion control instances for the receiving endpoints, and the MCU 10 conveys the packets from the sender 2 upon reception (without queueing). According to the present teachings SCFB packets, or feedback elements of the SCFB packets, from the receiving endpoints are used, e.g. combined, and common SCFB packets are generated and sent to the receiver.

Figure 2 illustrates an embodiment according to the present invention, implementing a network congestion control per receiving endpoint. The MCU 1 terminates the network congestion control part between the sender 2 and the MCU 1. The RTP packets from the sender 2 are temporarily stored in RTP queues 3a, 3b, 3c at the MCU 1. The basic principle is that the RTP packets towards each receiver 4a, 4b, 4c (in the following exemplified by user equipment, UE), are forwarded at a speed that is supported by each respective UE. The respective speed is controlled by each respective individual congestion control instance. The congestion control instance is described for a first receiver 4a but each receiver 4a, 4b, 4c has a corresponding congestion control instance. The congestion control instance comprises the RTP queue 3a, a congestion control 7 and a transmission scheduler 6. The transmission scheduler 6 provides the congestion control 7 with information such as timestamp of sent packet ($TS_{TX}$), sequence number of RTP packets (indicated by $RTP_{SN}$ in the figure) and size of RTP packets ($RTP_{size}$). Besides this information the congestion control 7 also receives SCFB from the receiver 4a, determines congestion window CWND, RTT and bytes in flight and provides this as input to the transmission scheduler 6. Based on the input, the transmission scheduler 6 transmits RTP packets from a queue of RTP packets 3a to the first receiver 4a via an User Datagram Protocol (UDP) socket 8. Each congestion control instance keeps a list of transmitted RTP packets in order to be able to compute the bytes in flight and update the congestion window appropriately.

The MCU 1 also comprises a feedback report generator 5 and an UDP socket 9 (or other interface) towards the sender 2. The feedback report generator 5 may be configured to combine the SCFB from the UEs 4a, 4b, 4c according to any of the embodiments described herein, or combination thereof.

According to the teachings, SCFB packets from the MCU 1 to the sender 2 for a given RTP sequence number are transmitted when all UEs 4a, 4b, 4c have acknowledged the given (or a higher) RTP sequence number. The timestamp of the received RTP packet with the highest sequence number, the $TS_{RX}$, is set to the wall-clock time when all UEs 4a, 4b, 4c have acknowledged the packet with this RTP sequence number. This way the sender 2 will be informed about the available throughput to the UE that has the poorest throughput among receiving UEs 4a, 4b, 4c.

In an alternative embodiment the strict all-must-ACK-rule can be relaxed somewhat. For instance, it may suffice that X% of the UEs ACK the given RTP sequence number, for instance more than 70% of the receivers or more than 90% or 95%. This may be beneficial if wanting to reduce the risk that a single UE out of many UEs that is in poor coverage reduces the bitrate for all UEs. The potential drawback is that the UEs that have not yet acknowledged the RTP sequence number will get a poor quality, so there is a balance to be struck here. In addition, it is possible to transcode or even freeze video for the UEs with poor coverage whose ACK are not taken into account.

As a particular example, it is supposed that a stream is forwarded by the MCU to 10 UEs. The MCU 1 experiences that 9 of the 10 UE generally acknowledge RTP packets within a given time span ($T_{ACK90\%}$), while the 10th UE has problems that cause the ACKs to arrive later, for instance due to the 10th UE having poor radio conditions. Instead of letting all 10 UEs share the fate with the 10th UE that has poor radio, it may be better to exclude that UE from taking part in the feedback from the MCU 1 to the sender 2.

In some embodiments, the stream of this 10th UE (or more UEs if another $T_{ACK90\%}$ is set) may e.g. be processed in the respective congestion control instances 3a, 6, 7 e.g. by stream thinning or transcoding to a considerably lower bitrate for the UE (or UEs) with poor radio. Stream thinning is a method to selectively remove parts of an encoded stream, with the purpose to achieve a lower bitrate without transcoding and with minimum impact on the result of the decoding process.

The congestion control instances 3a, 6, 7 for each UE may deal with packet loss handling in conventional way, e.g. by having a loss event trigger a reduction of the congestion window.

It would be disadvantageous to let the MCU 1 indicate the sum of all packets lost over each of the respective MCU to receiver paths, as that would give the sender 2 an impression of a situation worse than any of the actual paths. Instead, the MCU 1 may provide the sender 2 with SCFB representing the worst MCU 1 to receiver 4a, 4b, 4c path. This can be done by reporting the number of lost packets on the sender 2 to MCU 1 path combined with the number of lost packets on the worst MCU 1 to receiver 4a, 4b 4c path.

In cases wherein SCFB from a UE 4a, 4b, 4c to the MCU 1 indicates RTP packets as lost and the RTP packets are still stored in the RTP queue in the MCU 1, it is possible to avoid reporting them as lost to the sender 2 and instead retransmit them from the MCU 1. If reporting the packets as lost to the sender 2, the UE 4a, 4b, 4c that indicated the lost packet would then require more data to be sent from the sender 2, which in turn may delay transmission of subsequent RTP packets to the given UE 4a, 4b, 4c, with the potential effect that the returned acknowledgements are also delayed. If the UE 4a, 4b, 4c has poor throughput, acknowledgements from the MCU 1 to the sender 2 will consequently also be delayed, with the possible effect that the sender 2 bitrate is decreased.

An additional consideration is that the SCFB ACK vector (if present) can only indicate reception of a limited number (here 32+1=33) of highest RTP sequence number. This means that if a retransmitted RTP packet is lost again it may not be detected. Recovery by other means is then necessary.

The source quench bit (Q) is used to decrease the congestion window. If any UE 4a, 4b, 4c has indicated that the Q bit is set during a reporting interval, then the MCU 1 may set the Q bit in the next feedback from the MCU 1 to the sender 2. However, due to the non-synchronous reporting, the MCU 1 may need to track if it sent a Q bit to the sender 2 in the last report, and not forward additional receiver Q bits until one reporting interval has passed.

As mentioned earlier, a small number of UEs 4a that have very poor throughput compared to the other UEs 4b, 4c may be excluded from taking part in the feedback from the MCU 1 to the sender 2. An additional feature in this context is to apply transcoding or other processing, such as stream thinning, for these UEs with very poor throughput.

Figure 3 illustrates another embodiment according to the present teachings, wherein SCFB packets from the receiving endpoints 4a, 4b, 4c are again combined and common SCFB packets are generated. In this embodiment, in contrast to the embodiments described with reference to figure 2, no congestion instances 3a, 6, 7 are implemented for the UEs 4a, 4b, 4c. The SCFB feedback combiner 5 creates a combined SCFB report to the sender 2 based on the SCFB reports received from each UE 4a, 4b, 4c. An advantage of this is that the need for any additional transmission queues in the MCU 10 is avoided. Instead, the incoming RTP packets can immediately be forwarded, thereby minimizing the delay. The embodiments described with reference to figure 2 may be implemented also for the MCU 10 of figure 3, i.e. the same SCFB elements may be used. The way these SCFB elements are obtained may be slightly different, as will be clear from the following.

The SCFB elements that may to be combined comprise (for instance):

1. $TS_{RX}$ : i.e. the receiver time stamp corresponding to the highest received RTP sequence number

2. Highest received RTP sequence number

3. ACK vector (if any)

4. $N_{loss}$

5. $N_{ECN}$

The highest received sequence number and the ACK list from the SCFBs from the different UEs 4a, 4b, 4c may be combined into one SCFB report to be sent back to the sender 2. As described earlier, an SCFB report with highest sequence number = SN(t) is created and transmitted to the sender 2 at time instant t only when more than X% of the UEs 4a, 4b, 4c have acknowledged RTP sequence number SN(t). X may be less than 100% if it is desired to keep a high bitrate, with the risk that UEs 4a, 4b, 4c with poor coverage gets a poor performance.

The creation of the ACK list may, for instance, be implemented such that all bits are originally set to '1'. If any of the UEs 4a, 4b, 4c have indicated a lost packet for a given sequence number, then the corresponding bit in the combined SCFB report is set to 'o'. As described earlier, consideration has to be taken so as to not cause poor throughput due to the combination of packet loss indications. One alternative is to select the ACK vector for the UE 4a, 4b, 4c with the worst conditions or notify the sender 2 about the number of receivers 4a, 4b, 4c. The sender 2 can then take into account the number of receivers 4a, 4b, 4c when responding with appropriate action to the loss events, and not reduce the congestion window too much.

In another embodiment, a combined $N_{loss}$ counter may be implemented, such that it is increased whenever the $N_{loss}$ feedback element from any of the receivers 4a, 4b, 4c increases. Similar to the reasoning above, this can cause poor throughput due to the accumulated packet loss sensitivity. In some embodiments therefore, only the $N_{loss}$ feedback elements from the worst off receiver 4a, 4b, 4c are considered.

The handling of the $N_{ECN}$ counters may be implemented in a manner corresponding to what has been described for the $N_{loss}$ counter.

The combination function to get the $TS_{RX}$ for the combined feedback packet requires some extra effort when implementing the MCU 10 according to the embodiment of figure 3. A complicating matter is that the receive timestamps for the different UEs 4a, 4b, 4c start from a different (likely random) offset.

Letting a first UE 4a be the first UE that joins a session. The $TS_{RX}$ for this first UE 4a is then a vector $TS_{RX}(SN)$ where SN is the highest received sequence number corresponding to the given $TS_{RX}$. A UE-specific offset is computed from the vector. Typically the offset is given already by the first received feedback but a more advanced function can iteratively determine a more accurate offset, taking into account that even the first packet may have been subject to delay jitter, which then requires the RTP timestamp and knowledge about the RTP sampling rate.

When a new UE arrives, a second UE 4b, the same procedure to obtain a new UE-specific offset is repeated. In the combined SCFB report from the MCU 10 to the sender 2, the $TS_{RX}$ will use the obtained offsets in order to create a $TS_{RX}(SN)$ that is consistent, i.e. does not show discontinuities when changing which UE that dictates the transmission of the feedback report to the sender 2.

This procedure may be needed as it is the UE SCFB report that is the last to acknowledge a given sequence number that sets the $TS_{RX}$. Since channel conditions can vary, the "last" UE 4a, 4b, 4c to report may vary over time.

The value of the Q bit from the respective receivers 4a, 4b, 4c is forwarded by the MCU 10 to the sender 2. If any receiver 4a, 4b, 4c has indicated that the Q bit is set, during a reporting interval, then the MCU 10 shall set the Q bit in the next feedback from the MCU 10 to the sender 2. However, due to the non-synchronous reporting, the MCU 10 will need to track if it sent a Q bit to the sender 2 in the last report, and not forward additional receiver Q bits until at least one reporting interval has passed. This is in line with the Q bit handling of the embodiment illustrated in figure 2.

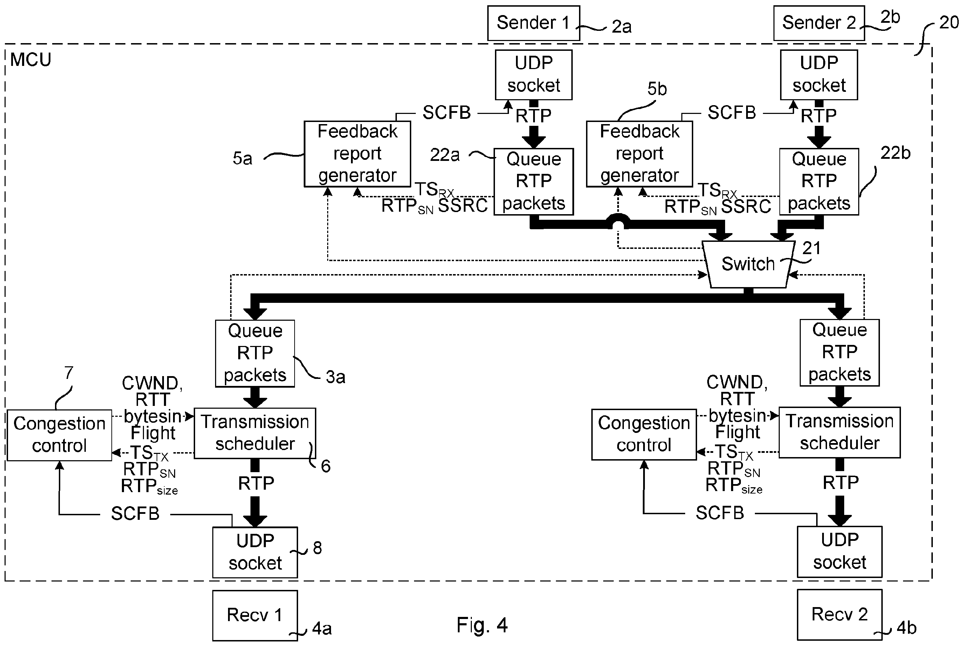

Figure 4 illustrates still another embodiment according to the present teachings. In particular, an MCU 20 is illustrated with congestion instances 3a, 6, 7 (in particular SCReAM congestion control instances) for each receiver 4a, 4b (only two illustrated). The description of such control instance was given in relation to figure 2, and reference is made to this description. The MCU 20 also comprises a feedback report generator, as has been described, for implementing the combined feedback according to the present teachings. In this embodiment, each stream has a respective feedback report generator 5a, 5b for providing SCFN reports to the respective senders 2a, 2b.

The MCU 20 also comprises a switch 21 that switches between streams. Figure 4 shows an example where two senders 2a, 2b are switched between. The streams from the respective senders 2a, 2b are queued in a respective queue 22a, 22b. The MCU 20 takes the video streams from the two or more senders 2a, 2b and forwards the selected video stream to one or more receivers 4a, 4b. The RTP sequence number is re-generated in the forwarded RTP packets.

The switch 21 is configured with conventional switching functionality, such as for example transmission of Full Intra Request (FIR) to the sender 2a, 2b which is being switched in, to get a clean decoder starting point at the point of switch. SCReAM does not impose any changes in this respect. An efficiently compressed, encoded representation of media (e.g. video) typically involves sending a difference from previous media samples (like a video picture). Therefore, obtaining a "starting point" for a receiver that did not receive the previous samples requires sending a request to the media-sending encoder that it should send a media sample that does not use such difference from previous samples. It is noted that FIR is only one specific example of such request (i.e. request to send a starting point by not using any difference for a media sample). This request is necessary, since the sender in general does not know when the media stream it sends is "switched in" by the MCU, that is, when the media stream is being forwarded to a receiver that does not have the history of differences needed to decode the media.

The stream that is currently forwarded as active is acknowledged as has been described in relation to figure 2. For that to work, a mapping should be kept between the RTP sequence numbers given by the senders 2a, 2b and the sequence numbering implemented by the MCU 20. The mapping is needed in order to acknowledge the correct RTP sequence number back to the active sender 2a, 2b.

Senders 2a, 2b that are inactive (i.e. media is not forwarded) pose an additional challenge in that it is unknown what the end-to-end characteristics would be if the senders were not inactive. This may be implemented such that to acknowledge the received RTP packets directly as they are received by the MCU 20. However, doing so may create an unnatural jump in one way delay when the stream is switched to active (i.e. is being forwarded) and the information in the SCFB reports are based on measurements all the way from the downlink receivers 4a, 4b instead of just from the MCU 20. A conceivable solution is to delay the acknowledgements $D_{Inactive}$ corresponding to the RTT measured over the link in the direction from the MCU 20 to the receivers 4a, 4b. Typically, it is the path between the MCU 20 and the receiver 4a, 4b with the longest RTT that dictates the delay, but in case for instance the X% of the receivers 4a, 4b rule, described earlier, is applied, then the delay may instead be determined from the receivers 4a, 4b that actually participate in the feedback to the sender 2a, 2b. With this in place, the one way delay measured by the senders 2a, 2b will be minimally affected by the switching.

The case when no receivers 4a, 4b are (yet) connected pose a minor challenge, as there is not yet any RTT estimates for the links between the MCU 20 and the prospective receivers 4a, 4b. $D_{Inactive}$ is therefore initialized to an estimate of the RTT that is likely to occur once receivers 4a, 4b connect.

An alternative to the above is to transmit an SCFB report to the inactive senders that indicate that all is fine, regardless of the status between the sender 2a, 2b to MCU 20 path. Yet another alternative is to indicate explicitly in a bit in the SCFB report that the sender 2a, 2b is becoming active, meaning that the path reported on has changed from MCU 20 only to now also include the MCU to receiver path, in which case the sender 2a, 2b can take appropriate actions to ensure that the sender's congestion control is working properly. An example on such an action may be to reset the base delay history. The base delay history is used in SCReAM to estimate the queuing delay. The timestamp clocks on sender and receiver side are not synchronized. This means that it is not possible to measure the exact time that it takes for a packet to travel from sender to receiver. Instead, the method used is to estimate the base delay in order to estimate the queuing delay in the network. The base delay is computed as the min value of $TS_{Tx}$ and $TS_{Rx}$ for each RTP packet that is acknowledged according to:

baseDelay = min(baseDelay , $TS_{Rx}$ - $TS_{Tx}$); baseDelay is initialized to a very high value

The baseDelay may become invalid over time, e.g. due to route changes. For this reason a history of baseDelays (baseDelayHistory) is maintained and updated e.g. every 10 seconds. The size of the baseDelayHistory vector is limited to e.g. 20 elements, which means that old baseDelay estimates are shifted out over time.

For each packet that is acknowledged, the one way delay (OWD) is computed as

$$OWD = TS_{Rx} - TS_{Tx} - min(baseDelayHistory)$$

In the MCU case, it is possible that each host sends two or more streams representing the same content but with different quality (simulcast). Support for this may be implemented by means of a corresponding number of additional RTP packet queues for each SCReAM instance (addressing a respective receiver 4a, 4b). The management of the SCFB reports to the senders 2a, 2b is in this case somewhat simpler as all simulcast senders in the same host are to be considered either "active" or "inactive".

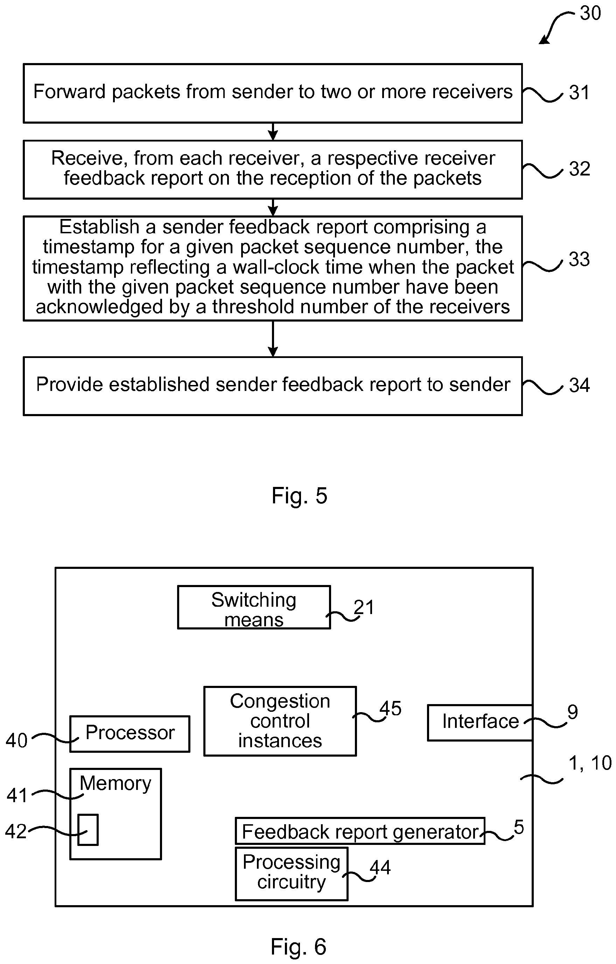

The various features and embodiments that have been described may be combined in different ways, examples of which are given in the following with reference first to figure 5.

Figure 5 illustrates a flow chart over steps of an embodiment of a method in a multi-point unit in accordance with the present invention. A method 30 is provided that may be implemented and performed in a multipoint control unit 1, 10 for congestion control in multiparty conferencing. The sending part 2 may be configured to use a self-clocking rate adaptation scheme, wherein the sending part does not get a bit rate from the receivers and instead relies on the amount of packets (e.g. RTP packets) to be transmitted being in direct proportion to the amount of packets that the receivers acknowledge.

The method 30 comprises forwarding 31 packets of a media stream from the sending part 2 to receiving parts 4a, 4b, 4c of the multiparty conference, the receiving parts 4a, 4b, 4c being two or more.

The method 30 comprises receiving 32, from each receiving part 4a, 4b, 4c, a respective receiver feedback report on the reception of the packets.

The method 30 comprises establishing 33 a sender feedback report comprising a timestamp $TS_{RX}$ for a given packet sequence number, wherein the timestamp reflects a wall-clock time when the packet with the given packet sequence number have been acknowledged by a threshold number of the receiving parts 4a, 4b, 4c. The sender feedback report may be seen as indicating a reference path which is representative for (or applicable to) each receiving part 4a, 4b, 4c. The packet with the given packet sequence number may be acknowledged by a receiver explicitly by an acknowledgment for this particular packet, or it may be acknowledged through a later sequence number. That is, the packet with the given packet sequence number may be acknowledged by indicating in the feedback a packet sequence number that is higher together with indication of no packet losses having occurred (e.g. using the ACK vector in case of SCReAM), hence also acknowledging the given packet.

The method 30 comprises providing 34 the established sender feedback report to the sending part 2.

According to the present teachings, the sender is provided with information on the supported rate within the receiver group and adapts the rate to one suiting all the receivers. The method 30 avoids the need for transcoding e.g. video streams in the multipoint control unit. This is in contrast with prior art, wherein the sender knows the best rate for each receiver or group of receivers and the MCU is forced to perform transcoding or transrating to adjust the bit-rate to a more suitable rate depending on the particular conditions for the different receivers. In prior art, also in cases where simulcast is used, lack of knowledge of the currently supported bit-rates can result in the receiver being forced to receive media with a lower quality than what could be achieved if the sender knew the supported rate within the targeted group.

In various embodiments, the threshold number of receiving parts 4a, 4b, 4c having acknowledged the packet is set to more than 50 % of all receiving parts 4a, 4b, 4c, or by more than 70 %, or by more than 90%, or by more than 95 % or by 100% of all receiving parts 4a, 4b, 4c.

In some embodiments, the establishing 33 comprises determining the timestamp $TS_{RX}$ such that one or more receiver feedback reports are excluded. It is noted that a receiver feedback report may be excluded for different reasons. The receiver feedback report may be excluded because it was never sent and can hence not be received, or because it was sent but still not received e.g. being in transit or being lost, or because it is explicitly excluded, i.e. excluded by choice. The receiver feedback report could, as have been described, be excluded by choice for a receiving part with very poor reception conditions, in order for this receiving part to not affect the quality of the other receiving parts too much.

In a variation of the above embodiment, the method 30 comprises transcoding or stream thinning the media stream for each of the one or more receiving parts 4a, 4b, 4c for which a receiver feedback report is excluded.

In various embodiments, the method 30 comprises retransmitting a packet to a receiving part 4a, 4b, 4c that has indicated in its feedback report the packet as lost. If the multi-point control unit 1, 10 has the packet available, then it may send the packet to a receiving part 4a, 4b, 4c having indicated the packet as lost, alleviating the sender from having to resend it and thus reducing delay.

In various embodiments, the method 30 comprises setting a source quench bit in the sender feedback report when at least one received feedback report from the at least two receiving parts 4a, 4b, 4c comprises a source quench bit being set.

In various embodiments, the multipoint control unit 1, 10 utilizes feedback elements of Self-clocking Rate Adaptation for Multimedia, SCReAM, congestion control.

In various embodiments, the received receiver feedback reports comprise a feedback element, $N_{loss}$, counting accumulated number of lost packets, and the method 30 comprises: increasing a counter C1 whenever a received feedback report indicates an increase in the feedback element, $N_{loss}$, and including a feedback element, $N_{loss}$, in the sender feedback report based on the counter C1 value.

In various embodiments, the method 30 comprises switching between a first and a second sender and wherein the providing 34 comprises providing a respective sender feedback report with a delay calculated based on a round trip delay between the multipoint control unit and one or more of the receiving parts 4a, 4b, 4c.

Figure 6 illustrates schematically a multi-point unit 1, 10, and means for implementing embodiments of the present invention.

The a multipoint control unit 1, 10 comprises a processor 40 comprising any combination of one or more of a central processing unit (CPU), multiprocessor, microcontroller, digital signal processor (DSP), application specific integrated circuit etc. capable of executing software instructions stored in a memory 41 which can thus be a computer program product 41. The processor 40 can be configured to execute any of the various embodiments of the method for instance as described in relation to figure 5.

The memory 41 can be any combination of read and write memory (RAM) and read only memory (ROM), Flash memory, magnetic tape, Compact Disc (CD)-ROM, digital versatile disc (DVD), Blu-ray disc etc. The memory 41 may also comprise persistent storage, which, for example, can be any single one or combination of magnetic memory, optical memory, solid state memory or even remotely mounted memory.

The multipoint control unit 1, 10 comprises one or more interface 8, 9 for communicating with other devices, in particular with sending parts and receiving parts as has been described earlier. Such interface may for instance comprise one or more UDP sockets. The interface 8, 9 may comprise means, e.g. interfaces, protocol stacks etc. and the multipoint control unit 1, 10 may for instance receive receiver feedback reports from receiving parts of the multiparty conferencing and transmit sender feedback reports to sending parts by means of such interface(s).

The multipoint control unit 1, 10 comprises a feedback report generator 5, as has been described earlier with reference e.g. to figures 2 and 3.

The multipoint control unit 1, 10 may optionally, in some embodiments, comprise congestion control instances 45, e.g. comprising congestion control 7, transmission scheduler 6 and queue handling 3a, as has been described earlier with reference to figure 2. Such congestion control instances are indicated here at reference numeral 45.

The multipoint control unit 1, 10 may optionally, in some embodiments, comprise switching means 21 for switching between streams sent from two or more sending parts. Such switching means 21 has been described with reference to figure 4.

The multipoint control unit 1, 10 may comprise additional processing circuitry, schematically indicated at reference numeral 44, for implementing the various embodiments according to the present teachings.

The present teachings provide computer programs 42 for the multipoint control unit 1, 10 for congestion control in multiparty conferencing. The computer program 42 comprises computer program code, which, when executed on at least one processor 40 of the multipoint control unit 1, 10 causes the multipoint control unit 1, 10 to perform the method 30 according to any of the described embodiments thereof.

The present disclosure also encompasses computer program products 41 comprising a computer program 42 for implementing the embodiments of the method as described, and a computer readable means on which the computer program 42 is stored. The computer program product, or the memory, thus comprises instructions executable by the processor 40. Such instructions may be comprised in a computer program, or in one or more software modules or function modules. The computer program product 41 may, as mentioned earlier, be any combination of random access memory (RAM) or read only memory (ROM), Flash memory, magnetic tape, Compact Disc (CD)-ROM, digital versatile disc (DVD), Blu-ray disc etc.

A multipoint control unit 1, 10 is provided for congestion control in multiparty conferencing. The multipoint control unit 1, 10 is configured to:

-    forward packets of a media stream from the sending part 2 to receiving parts 4a, 4b, 4c of the multiparty conference, the receiving parts 4a, 4b, 4c being two or more,

-    receive, from each receiving part 4a, 4b, 4c, a respective receiver feedback report on the reception of the packets,

-    establish a sender feedback report comprising a timestamp $TS_{RX}$ for a given packet sequence number, wherein the timestamp reflects a wall-clock time when the packet with the given packet sequence number have been acknowledged by a threshold number of the receiving parts 4a, 4b, 4c, and

-    provide the established sender feedback report to the sending part 2.

The multipoint control unit 1, 10 may be configured to perform the steps of the described embodiments e.g. by comprising a processor 40 and memory 41, the memory 41 containing instructions executable by the processor 40, whereby the multipoint control unit 1, 10 is operative to perform the steps.

In various embodiments, the threshold number of receiving parts 4a, 4b, 4c having acknowledged the packet is set to more than 50 % of all receiving parts 4a, 4b, 4c, or by more than 70 %, or by more than 90%, or by more than 95 % or by 100% of all receiving parts 4a, 4b, 4c.

In various embodiments, the multipoint control unit 1, 10 is configured to establish by determining the timestamp $TS_{RX}$ such that one or more receiver feedback reports are excluded.

In various embodiments, the multipoint control unit 1, 10 is configured to transcode or stream thin the media stream for each of the one or more receiving parts 4a, 4b, 4c for which a receiver feedback report is excluded.

In various embodiments, the multipoint control unit 1, 10 is configured to retransmit a packet to a receiving part 4a, 4b, 4c that has indicated in its feedback report the packet as lost.

In various embodiments, the multipoint control unit 1, 10 is configured to set a source quench bit in the sender feedback report when at least one received feedback report from the at least two receiving parts 4a, 4b, 4c comprises a source quench bit being set.

In various embodiments, the multipoint control unit 1, 10 is configured to utilize feedback elements of Self-clocking Rate Adaptation for Multimedia, SCReAM, congestion control.

In various embodiments, the received receiver feedback reports comprise a feedback element, $N_{loss}$, counting accumulated number of lost packets, and the multipoint control unit 1, 10 is configured to: increase a counter C1 whenever a received feedback report indicates an increase in the feedback element, $N_{loss}$, and to include a feedback element, $N_{loss}$, in the sender feedback report based on the counter C1 value.

In various embodiments, the multipoint control unit 1, 10 is configured to switch between a first and a second sender and configured to provide a respective sender feedback report with a delay calculated based on a round trip delay between the multipoint control unit and one or more of the receiving parts 4a, 4b, 4c.

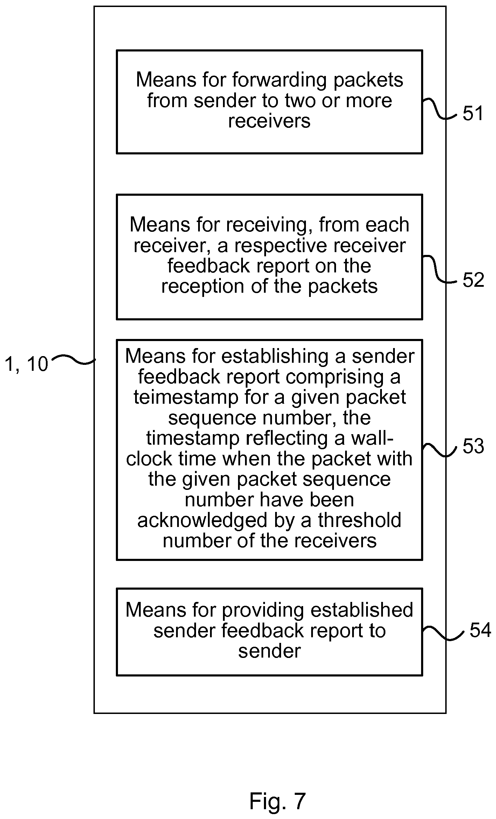

Figure 7 illustrates a multipoint control unit comprising function modules/software modules for implementing embodiments of the present invention. The means, e.g. function modules, e.g. function modules, can be implemented using software instructions such as computer program executing in a processor and/or using hardware, such as application specific integrated circuits (ASICs), field programmable gate arrays, discrete logical components etc., and any combination thereof. Processing circuitry may be provided, which may be adaptable and in particular adapted to perform any of the steps of the methods that have been described.

A multipoint control unit 1, 10 for congestion control in multiparty conferencing is provided. The multipoint control unit 1, 10 comprises first means 51 for forwarding packets of a media stream from the sending part to receiving parts of the multiparty conference, the receiving parts being two or more.

The multipoint control unit 1, 10 comprises second means 52 for receiving, from each receiving part, a respective receiver feedback report on the reception of the packets.

The multipoint control unit 1, 10 comprises third means 53 for establishing a sender feedback report comprising a timestamp for a given packet sequence number, wherein the timestamp reflects a wall-clock time when the packet with the given packet sequence number have been acknowledged by a threshold number of the receiving parts.

The multipoint control unit 1, 10 comprises fourth means 54 for providing the established sender feedback report to the sending part.

The multipoint control unit 1, 10 may comprise still further means for implementing the various embodiments of the method 20 that have been described.

The invention has mainly been described herein with reference to a few embodiments. However, as is appreciated by a person skilled in the art, other embodiments than the particular ones disclosed herein are equally possible within the scope of the invention, as defined by the appended patent claims.

**Claims**

1. A method (30) performed in a multipoint control unit (1, 10) for congestion control in multiparty conferencing, the method (30) comprising:

   - forwarding (31) packets of a media stream from the sending part (2) to receiving parts (4a, 4b, 4c) of the multiparty conference, the receiving parts (4a, 4b, 4c) being two or more,
   - receiving (32), from each receiving part (4a, 4b, 4c), a respective receiver feedback report on the reception of the packets,
   - establishing (33) a sender feedback report comprising a timestamp ($TS_{RX}$) for a given packet sequence number, wherein the timestamp reflects a wall-clock time when the packet with the given packet sequence number have been acknowledged by a threshold number of the receiving parts (4a, 4b, 4c), and
   - providing (34) the established sender feedback report to the sending part (2).

2. The method (30) as claimed in claim 1, wherein the threshold number of receiving parts (4a, 4b, 4c) having acknowledged the packet is set to more than 50 % of all receiving parts (4a, 4b, 4c), or by more than 70 %, or by more than 90%, or by more than 95 % or by 100% of all receiving parts (4a, 4b, 4c).

3. The method (30) as claimed in claim 1 or 2, wherein the establishing (33) comprises determining the timestamp ($TS_{RX}$) such that one or more receiver feedback reports are excluded.

4. The method (30) as claimed in claim 3, comprising transcoding or stream thinning the media stream for each of the one or more receiving parts (4a, 4b, 4c) for which a receiver feedback report is excluded.

5. The method (30) as claimed in any of the preceding claims, comprising retransmitting a packet to a receiving part (4a, 4b, 4c) that has indicated in its feedback report the packet as lost.

**6.** The method (30) as claimed in any of the preceding claims, comprising setting a source quench bit in the sender feedback report when at least one received feedback report from the at least two receiving parts (4a, 4b, 4c) comprises a source quench bit being set.

**7.** A computer program (42) for a multipoint control unit (1, 10, 20) for congestion control in multiparty conferencing, the computer program (42) comprising computer program code, which, when executed on at least one processor on the multipoint control unit (1, 10, 20) causes the multipoint control unit (1, 10, 20) to perform the method (30) according to any one of claims 1-6.

**8.** A computer program product (41) comprising a computer program (42) as claimed in claim 7 and a computer readable means on which the computer program (42) is stored.

**9.** A multipoint control unit (1, 10) for congestion control in multiparty conferencing, the multipoint control unit (1, 10) being configured to:

- forward packets of a media stream from the sending part (2) to receiving parts (4a, 4b, 4c) of the multiparty conference, the receiving parts (4a, 4b, 4c) being two or more,
- receive, from each receiving part (4a, 4b, 4c), a respective receiver feedback report on the reception of the packets,
- establish a sender feedback report comprising a timestamp ($TS_{RX}$) for a given packet sequence number, wherein the timestamp reflects a wall-clock time when the packet with the given packet sequence number have been acknowledged by a threshold number of the receiving parts (4a, 4b, 4c), and
- provide the established sender feedback report to the sending part (2).

**10.** The multipoint control unit (1, 10) as claimed in claim 9, wherein the threshold number of receiving parts (4a, 4b, 4c) having acknowledged the packet is set to more than 50 % of all receiving parts (4a, 4b, 4c), or by more than 70 %, or by more than 90%, or by more than 95 % or by 100% of all receiving parts (4a, 4b, 4c).

**11.** The multipoint control unit (1, 10) as claimed in claim 9 or 10, configured to establish by determining the timestamp ($TS_{RX}$) such that one or more receiver feedback reports are excluded.

**12.** The multipoint control unit (1, 10) as claimed in claim 11, configured to transcode or stream thin the media stream for each of the one or more receiving parts (4a, 4b, 4c) for which a receiver feedback report is excluded.

**13.** The multipoint control unit (1, 10) as claimed in any of claims 9-12, configured to retransmit a packet to a receiving part (4a, 4b, 4c) that has indicated in its feedback report the packet as lost.

**14.** The multipoint control unit (1, 10) as claimed in any of claims 9-13, configured to set a source quench bit in the sender feedback report when at least one received feedback report from the at least two receiving parts (4a, 4b, 4c) comprises a source quench bit being set.

**15.** The multipoint control unit (1, 10) as claimed in any of claims 9-14, configured to utilize feedback elements of Self-clocking Rate Adaptation for Multimedia, SCReAM, congestion control.

**Patentansprüche**

**1.** Verfahren (30), das in einer Mehrpunktsteuereinheit (1, 10) zur Überlastungssteuerung in Mehrparteienkonferenzen durchgeführt wird, das Verfahren (30) umfassend:

- Weiterleiten (31) von Paketen eines Medienstreams vom sendenden Teil (2) zu empfangenden Teilen (4a, 4b, 4c) der Mehrparteienkonferenz, wobei die empfangenden Teile (4a, 4b, 4c) zwei oder mehr sind,
- Empfangen (32), von jedem empfangenden Teil (4a, 4b, 4c), eines entsprechenden Empfängerrückmeldungsberichts zum Empfang der Pakete,
- Erstellen (33) eines Senderrückmeldungsberichts, umfassend einen Zeitstempel ($TS_{RX}$) für eine bestimmte Paketlaufnummer, wobei der Zeitstempel eine Uhrzeit wiedergibt, zu der das Paket mit der gegebenen Paketlaufnummer durch eine Schwellenwertzahl der empfangenden Teile (4a, 4b, 4c) bestätigt wurde, und
- Bereitstellen (34) des erstellten Senderrückmeldungsberichts dem sendenden Teil (2) .

2. Verfahren (30) nach Anspruch 1, wobei die Schwellenwertzahl von empfangenden Teilen (4a, 4b, 4c), die das Paket bestätigt haben, auf mehr als 50% aller empfangenden Teile (4a, 4b, 4c) oder auf mehr als 70% oder mehr als 90% oder mehr als 95% oder 100% aller empfangenden Teile (4a, 4b, 4c) eingestellt ist.

3. Verfahren (30) nach Anspruch 1 oder 2, wobei das Erstellen (33) ein derartiges Bestimmen des Zeitstempels ($TS_{RX}$) umfasst, dass ein oder mehrere Empfängerrückmeldungsberichte ausgeschlossen sind.

4. Verfahren (30) nach Anspruch 3, umfassend ein Transcodieren oder Stream-Ausdünnen des Medienstreams für jeden des einen oder der mehreren der empfangenden Teile (4a, 4b, 4c), für die ein Empfängerrückmeldungsbericht ausgeschlossen ist.

5. Verfahren (30) nach einem der vorangehenden Ansprüche, umfassend ein erneutes Senden eines Pakets zu einem empfangenden Teil (4a, 4b, 4c), der in seinem Rückmeldungsbericht das Paket als verloren angegeben hat.

6. Verfahren (30) nach einem der vorangehenden Ansprüche, umfassend ein Setzen eines Source-Quench-Bits in dem Senderrückmeldungsbericht, wenn mindestens ein empfangender Rückmeldungsbericht von den mindestens zwei empfangenden Teilen (4a, 4b, 4c) ein Source-Quench-Bit umfasst, das gesetzt ist.

7. Computerprogramm (42) für eine Mehrpunktsteuereinheit (1, 10, 20) zur Überlastungssteuerung in Mehrparteienkonferenzen, wobei das Computerprogramm (42) einen Computerprogrammcode umfasst, der, wenn er auf mindestens einem Prozessor auf der Mehrpunktsteuereinheit (1, 10, 20) ausgeführt wird, die Mehrpunktsteuereinheit (1, 10, 20) veranlasst, das Verfahren (30) nach einem der Ansprüche 1-6 durchzuführen.

8. Computerprogrammprodukt (41), umfassend ein Computerprogramm (42) nach Anspruch 7 und ein computerlesbares Mittel, auf dem das Computerprogramm (42) gespeichert ist.

9. Mehrpunktsteuereinheit (1, 10) zur Überlastungssteuerung in Mehrparteienkonferenzen, wobei die Mehrpunktsteuereinheit (1, 10) konfiguriert ist zum:

   - Weiterleiten von Paketen eines Medienstreams vom sendenden Teil (2) zu empfangenden Teilen (4a, 4b, 4c) der Mehrparteienkonferenz, wobei die empfangenden Teile (4a, 4b, 4c) zwei oder mehr sind,
   - Empfangen, von jedem empfangenden Teil (4a, 4b, 4c), eines entsprechenden Empfängerrückmeldungsberichts zum Empfang der Pakete,
   - Erstellen eines Senderrückmeldungsberichts, umfassend einen Zeitstempel ($TS_{RX}$) für eine bestimmte Paketlaufnummer, wobei der Zeitstempel eine Uhrzeit wiedergibt, zu der das Paket mit der gegebenen Paketlaufnummer durch eine Schwellenwertzahl der empfangenden Teile (4a, 4b, 4c) bestätigt wurde, und
   - Bereitstellen des erstellten Senderrückmeldungsberichts dem sendenden Teil (2) .

10. Mehrpunktsteuereinheit (1, 10) nach Anspruch 9, wobei die Schwellenwertzahl von empfangenden Teilen (4a, 4b, 4c), die das Paket bestätigt haben, auf mehr als 50% aller empfangenden Teile (4a, 4b, 4c) oder auf mehr als 70% oder mehr als 90% oder mehr als 95% oder 100% aller empfangenden Teile (4a, 4b, 4c) eingestellt ist.

11. Mehrpunktsteuereinheit (1, 10) nach Anspruch 9 oder 19, die konfiguriert ist zum Erstellen durch ein derartiges Bestimmen des Zeitstempels ($TS_{RX}$), dass ein oder mehrere Empfängerrückmeldungsberichte ausgeschlossen sind.

12. Mehrpunktsteuereinheit (1, 10) nach Anspruch 11, die konfiguriert ist zum Transcodieren oder Stream-Ausdünnen des Medienstreams für jeden des einen oder der mehreren der empfangenden Teile (4a, 4b, 4c), für die ein Empfängerrückmeldungsbericht ausgeschlossen ist.

13. Mehrpunktsteuereinheit (1, 10) nach einem der Ansprüche 9-12, die konfiguriert ist zum erneuten Senden eines Pakets zu einem empfangenden Teil (4a, 4b, 4c), der in seinem Rückmeldungsbericht das Paket als verloren angegeben hat.

14. Mehrpunktsteuereinheit (1, 10) nach einem der Ansprüche 9-13, die konfiguriert ist zum Setzen eines Source-Quench-Bits in dem Senderrückmeldungsbericht, wenn mindestens ein empfangender Rückmeldungsbericht von den mindestens zwei empfangenden Teilen (4a, 4b, 4c) ein Source-Quench-Bit umfasst, das gesetzt ist.

15. Mehrpunktsteuereinheit (1, 10) nach einem der Ansprüche 9-14, die konfiguriert ist zum Nutzen von Rückmeldungselementen einer Self-clocking Rate Adaptation for Multimedia, SCreAM, Überlastungssteuerung.

**Revendications**

1. Procédé (30) effectué dans une unité de commande multipoint (1, 10) pour une commande de congestion dans une conférence multipartite, le procédé (30) comprenant :

   - le transfert (31) de paquets d'un flux multimédia de la partie émettrice (2) à des parties réceptrices (4a, 4b, 4c) de la conférence multipartite, les parties réceptrices (4a, 4b 4c) étant au nombre d'au moins deux,
   - la réception (32), en provenance de chaque partie réceptrice (4a, 4b 4c), d'un rapport de rétroaction de récepteur respectif sur la réception des paquets,
   - l'établissement (33) d'un rapport de rétroaction d'émetteur comprenant un horodatage ($TS_{RX}$) pour un numéro de séquence de paquet donné, dans lequel l'horodatage reflète une heure d'horloge murale lorsque le paquet avec le numéro de séquence de paquet donné fait l'objet d'un accusé de réception par un nombre de seuil des parties réceptrices (4a, 4b 4c), et
   - la fourniture (34) du rapport de rétroaction d'émetteur établi à la partie émettrice (2).

2. Procédé (30) selon la revendication 1, dans lequel le nombre de seuil de parties réceptrices (4a, 4b 4c) ayant accusé réception du paquet est réglé à plus de 50 % de toutes les parties réceptrices (4a, 4b 4c), ou plus de 70 %, ou plus de 90 %, ou plus de 95 % ou 100 % de toutes les parties réceptrices (4a, 4b 4c).

3. Procédé (30) selon la revendication 1 ou 2, dans lequel l'établissement (33) comprend la détermination de l'horodatage ($TS_{RX}$) de sorte qu'un ou plusieurs rapports de rétroaction de récepteur soient exclus.

4. Procédé (30) selon la revendication 3, comprenant le transcodage ou la réduction du flux multimédia pour chacune des une ou plusieurs parties réceptrices (4a, 4b 4c) pour laquelle un rapport de rétroaction de récepteur est exclu.

5. Procédé (30) selon l'une quelconque des revendications précédentes, comprenant la retransmission d'un paquet à une partie réceptrice (4a, 4b 4c) ayant indiqué, dans son rapport de rétroaction, que le paquet est perdu.

6. Procédé (30) selon l'une quelconque des revendications précédentes, comprenant le réglage d'un bit d'atténuation de source dans le rapport de rétroaction d'émetteur lorsqu'au moins un rapport de rétroaction reçu en provenance des au moins deux parties réceptrices (4a, 4b 4c) comprend un bit d'atténuation de source qui est réglé.

7. Programme informatique (42) pour une unité de commande multipoint (1, 10, 20) pour une commande de congestion dans une conférence multipartite, le programme informatique (42) comprenant un code de programme informatique qui, lorsqu'il est exécuté sur au moins un processeur sur l'unité de commande multipoint (1, 10, 20), amène l'unité de commande multipoint (1, 10, 20) à effectuer le procédé (30) selon l'une quelconque des revendications 1 à 6.

8. Produit de programme informatique (41) comprenant un programme informatique (42) selon la revendication 7 et un moyen lisible par ordinateur sur lequel le programme informatique (42) est mémorisé.

9. Unité de commande multipoint (1, 10) pour une commande de congestion dans une conférence multipartite, l'unité de commande multipoint (1, 10) étant configurée pour :

   - le transfert de paquets d'un flux multimédia de la partie émettrice (2) à des parties réceptrices (4a, 4b, 4c) de la conférence multipartite, les parties réceptrices (4a, 4b 4c) étant au nombre d'au moins deux,
   - la réception, en provenance de chaque partie réceptrice (4a, 4b 4c), d'un rapport de rétroaction de récepteur respectif sur la réception des paquets,
   - l'établissement d'un rapport de rétroaction d'émetteur comprenant un horodatage ($TS_{RX}$) pour un numéro de séquence de paquet donné, dans laquelle l'horodatage reflète une heure d'horloge murale lorsque le paquet avec le numéro de séquence de paquet donné fait l'objet d'un accusé de réception par un nombre de seuil des parties réceptrices (4a, 4b 4c), et
   - la fourniture du rapport de rétroaction d'émetteur établi à la partie émettrice (2).

10. Unité de commande multipoint (1, 10) selon la revendication 9, dans laquelle le nombre de seuil de parties réceptrices (4a, 4b 4c) ayant accusé réception du paquet est réglé à plus de 50 % de toutes les parties réceptrices (4a, 4b 4c), ou plus de 70 %, ou plus de 90 %, ou plus de 95 % ou 100 % de toutes les parties réceptrices (4a, 4b 4c).

11. Unité de commande multipoint (1, 10) selon la revendication 9 ou 10, configurée pour l'établissement par la détermination de l'horodatage ($TS_{RX}$) de sorte qu'un ou plusieurs rapports de rétroaction de récepteur soient exclus.

12. Unité de commande multipoint (1, 10) selon la revendication 11, configurée pour le transcodage ou la réduction du flux multimédia pour chacune des une ou plusieurs parties réceptrices (4a, 4b 4c) pour laquelle un rapport de rétroaction de récepteur est exclu.

13. Unité de commande multipoint (1, 10) selon l'une quelconque des revendications 9 à 12, configurée pour la retransmission d'un paquet à une partie réceptrice (4a, 4b 4c) ayant indiqué, dans son rapport de rétroaction, que le paquet est perdu.

14. Unité de commande multipoint (1, 10) selon l'une quelconque des revendications 9 à 13, configurée pour le réglage d'un bit d'atténuation de source dans le rapport de rétroaction d'émetteur lorsqu'au moins un rapport de rétroaction reçu en provenance des au moins deux parties réceptrices (4a, 4b 4c) comprend un bit d'atténuation de source qui est réglé.

15. Unité de commande multipoint (1, 10) selon l'une quelconque des revendications 9 à 14, configurée pour l'utilisation d'éléments de rétroaction de commande de congestion d'adaptation de débit d'auto-cadencement pour multimédia, SCReAM.

Fig. 1

Fig. 2

Fig. 3

EP 3 378 207 B1

Fig. 4

30

| Forward packets from sender to two or more receivers | 31 |

↓

| Receive, from each receiver, a respective receiver feedback report on the reception of the packets | 32 |

↓

| Establish a sender feedback report comprising a timestamp for a given packet sequence number, the timestamp reflecting a wall-clock time when the packet with the given packet sequence number have been acknowledged by a threshold number of the receivers | 33 |

↓

| Provide established sender feedback report to sender | 34 |

Fig. 5

Switching means ~21

40 — Processor

Congestion control instances ~45

Interface ~9

1, 10

41 — Memory

42 —

Feedback report generator ~5

Processing circuitry ~44

Fig. 6

Means for forwarding packets from sender to two or more receivers — 51

Means for receiving, from each receiver, a respective receiver feedback report on the reception of the packets — 52

Means for establishing a sender feedback report comprising a teimestamp for a given packet sequence number, the timestamp reflecting a wall-clock time when the packet with the given packet sequence number have been acknowledged by a threshold number of the receivers — 53

Means for providing established sender feedback report to sender — 54

1, 10

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2015244760 A1

**Non-patent literature cited in the description**

• Self-clocked rate adaptation for conversational video in LTE. **INGEMAR JOHANSSON.** CAPACITY SHARING WORKSHOP. ACM, 18 August 2014, 51-56